(19) **Europäisches Patentamt**
European Patent Office
Office européen des brevets

(11) **EP 1 363 800 B1**

(12) **EUROPÄISCHE PATENTSCHRIFT**

(45) Veröffentlichungstag und Bekanntmachung des Hinweises auf die Patenterteilung:
**12.11.2008 Patentblatt 2008/46**

(21) Anmeldenummer: **01995572.3**

(22) Anmeldetag: **05.12.2001**

(51) Int Cl.:
*B60K 31/00* (2006.01)    *G01S 13/93* (2006.01)
*G08G 1/16* (2006.01)    *B60T 7/22* (2006.01)
*B62D 6/00* (2006.01)

(86) Internationale Anmeldenummer:
**PCT/DE2001/004567**

(87) Internationale Veröffentlichungsnummer:
**WO 2002/058955 (01.08.2002 Gazette 2002/31)**

(54) **VORRICHTUNG ZUR ADAPTIVEN FAHRGESCHWINDIGKEITSREGLUNG EINES KRAFTFAHRZEUGS MITTELS LENK- ODER BREMSEINGRIFFE**

ADAPTIVE CRUISE CONTROL DEVICE FOR A MOTOR VEHICLE, WHICH USES STEERING OR BRAKING INTERVENTION

DISPOSITIF DE REGULATION ADAPTATIVE DE LA VITESSE D'UN VEHICULE AUTOMOBILE PAR DES OPERATIONS DE DIRECTION OU DE FREINAGE

(84) Benannte Vertragsstaaten:
**DE FR**

(30) Priorität: **23.01.2001 DE 10102772**

(43) Veröffentlichungstag der Anmeldung:
**26.11.2003 Patentblatt 2003/48**

(73) Patentinhaber: **ROBERT BOSCH GMBH**
**70442 Stuttgart (DE)**

(72) Erfinder: **WINNER, Hermann**
**76467 Bietigheim (DE)**

(56) Entgegenhaltungen:
**EP-A- 0 649 776**    **EP-A- 0 967 121**
**EP-A- 1 008 482**    **WO-A- 02/08010**
**DE-A- 19 725 656**    **DE-A- 19 729 952**
**US-A- 5 485 892**

## Beschreibung

Die vorliegende Erfindung betrifft eine Einrichtung sowie ein zugehöriges Verfahren, in der eine Funktion vorgesehen ist, die Eingangsgrößen verarbeitet und funktionsbedingte Ausgangssignale erzeugt. Diese Ausgangsgrößen betreffen automatische Bremsungen sowie automatische Lenkeingriffe in einem Kraftfahrzeug. Bei Vorliegen bestimmter Bedingungen wird ein aktueller Datensatz in einer nicht-flüchtigen Speichervorrichtung gesichert, bis diese über eine Schnittstelle ausgelesen worden sind. Durch diese Steuereinrichtung und das zugehörige Verfahren ist es möglich, Kollisionen von Kraftfahrzeugen mit anderen Verkehrsteilnehmern oder Objekten zu vermeiden oder zumindest abzumildern. Die in der Steuereinrichtung vorgesehene Funktion ist vorteilhafterweise ein Algorithmus, der die Wahrscheinlichkeit einer Kollision des eigenen Fahrzeugs mit einem Zielobjekt erkennen kann und gegebenenfalls eine Not- oder Vollbremsung oder aber einen Lenkeingriff oder eine Kombination aus beiden einleiten und durchführen kann.

Stand der Technik

Die EP 0 976 627 offenbart eine Bremsensteuerung für ein Fahrzeug. Detektiert ein Radarsystem eines Fahrzeugs mit Bremsensteuerung ein Objekt vor dem Fahrzeug, so beurteilt eine Schätzeinrichtung die Wahrscheinlichkeit, dass das Fahrzeug mit dem Objekt kollidiert. Ergibt das Schätzurteil, dass eine Kollisionswahrscheinlichkeit besteht, so veranlaßt eine automatische Bremseinheit eine automatische Bremsung um eine drohende Kollision zu vermeiden. Wird während der automatischen Bremsung eine fahrerbetätigte Bremsanforderung erkannt, so wird die Dringlichkeit der Fahrerbremsung geschätzt und die automatische Bremsensteuerung erzeugt eine Bremskraft, die dem Fahrerwunsch entspricht. Dadurch ergibt sich ein sanfter Übergang von der automatischen Bremsung zur fahrergesteuerten Bremsung.

Die DE 38 30 790 A1 beschreibt ein Verfahren und eine Vorrichtung zur automatischen Kollisionsvermeidung für automatisch führbare Fahrzeuge. Mittels dieses Verfahrens und Vorrichtung soll in Gefährdungssituationen durch Hindernisse mittels einer automatischen Kollisionsvermeidung ein kollisionsvermeidendes Beschleunigungs-, Brems- bzw. Ausweichmanöver durchgeführt werden. Dies geschieht durch ein hierarchisch aufgebautes Verfahren und durch eine zugehörige Vorrichtung, wobei sensorisch Daten des Fahrzeuges und seiner Sollbahn erfaßt und daraus ermittelte Sollsignale der Fahrzeugbahn einer zweiten hierarchischen Stufe einer Kollisionsvermeidungsvorrichtung zusammen mit den beispielsweise sensorisch erfaßten Daten einer Hindernisbahn zugeführt und darüber die Stellglieder der Fahrzeugregelung im Sinne einer Kollisionsvermeidung in einer dritten hierarchischen Stufe angesteuert werden.

Als gattungsbildend kann jedes der folgenden Dokumente angesehen werden:

Aus der US 5,485,892 ist ein Fahrzeugführungssystem für Automobile bekannt, bei dem eine Vielzahl an Fahrzeugsteuerprogrammen auswählbar sind und für die Fahrzeugsteuerung verwendbar sind um das Fahrzeug automatisch in Abhängigkeit der Fahrsituation zu steuern, wobei die Fahrsituation anhand der Umstände des weiteren Fahrbahnverlaufs, dem das Fahrzeug folgt, ausgewählt wird

Aus der EP 0 649 776 A ist ein Sicherheits-Management-System für den Schutz von Fahrzeuginsassen, bekannt, enthaltend ein Abstandsmeßsystem zu Objekten auf oder an der Straße, ein fahrzeuginternes Beschleunigungsmeßsystem, eine Bus-Verbindung zu anderen Fahrzeug-Meßsystemen sowie eine zentrale (Bord-) Rechnereinheit (CPU), wobei die Abstandsdaten und Beschleunigungsdaten sowie die Betriebszustandsdaten aus dem Fahrzeug in der Rechnereinheit verarbeitet und verknüpft werden, um je nach Gefahrensituation nacheinander Maßnahmen wie Warnungen und/oder Eingriffe ins Brems- und Lenksystem so vorzunehmen, daß Unfälle vermeidbar sind oder in ihrer Auswirkung gemildert werden.

Aus der EP 0 967 121 A ist ein Verfahren und eine Steuereinrichtung zur Minimierung von Unfallfolgen bei Fahrzeugen bekannt, wobei in einer Auswerteeinrichtung die von Umgebungssensoren gelieferten Umgebungsdaten und von der Fahrzeugelektronik gelieferte Fahrzeugdaten unter Berücksichtigung von in einem Speicher abgelegten charakteristischen Merkmalen laufend ausgewertet werden. Anhand dieser Auswertung kann festgestellt werden, ob eine unvermeidliche Unfallsituation bezüglich eines erkannten Hindernisses vorliegt, worauf dann die Auswerteeinrichtung über eine Bremsensteuerung ein gezieltes Abbremsen der einzelnen Räder des Fahrzeugs und/oder einen automatischen Lenkvorgang vornimmt. Dabei erfolgt der Bremsvorgang so, daß einerseits eine optimale Geschwindigkeitsreduzierung und auch ein günstiger Aufprallwinkel erreicht wird. Ein optimaler Aufprall-Sollwinkel hängt von fahrzeugspezifischen Merkmalen und von der jeweiligen Unfallsituation ab.

Aus der DE 197 29 952 A1 ist ein Fahrzeug mit einer Einrichtung zur Abstandsregelung sowie ein Abstandssensor bekannt, wobei der Abstandssensor gemeinsam mit einer Regeleinrichtung unabhängig von fahrzeugspezifischen Bedingungen verwendbar ist.

Aus der 197 25 656 A1 ist eine Vorrichtung und ein Verfahren zur Unterstützung von Überholvorgängen im Straßenverkehr für den Einsatz in einem Kraftfahrzeug bekannt. Dabei werden mittels Sensoren verschiedene Entfernungen und Relativgeschwindigkeiten von Objekten vor dem überholenden Kraftfahrzeug, insbesondere von Gegenverkehr, erfaßt und Überholdaten von einer Berechnungsvorrichtung berechnet, die einen Rückschluss darauf zulassen, ob ein Überholvorgang unter den gegenwärtigen Bedingungen oder durch Leistungszuführung durch das Antriebsaggregat oder überhaupt nicht möglich ist und der Fahrer über entsprechende Bedingungen mittels Warnsignaleinrichtungen informiert wird.

Vorteile der Erfindung

Die Erfindung geht aus von einer Einrichtung zum Bereitstellen von Signalen in einem Kraftfahrzeug, abhängig von Eingangssignalen, bezüglich Abstand und Relativgeschwindigkeit zu einem in Fahrtrichtung sich befindenden Objekt. Der Kern der Erfindung besteht darin, dass in der Einrichtung Mittel vorgesehen sind für wenigstens eine zusätzliche Stellgröße, die eine automatische Bremsung beziehungsweise einen automatischen Lenkeingriff betrifft. Als Bremsung ist insbesondere eine Verzögerung zur Kollisionsverminderung vorgesehen, die im Bereich der für das jeweilige Fahrzeug maximal möglichen Verzögerung liegt. Als Lenkeingriff ist insbesondere eine Lenkbewegung der Räder des Kraftfahrzeugs derart vorgesehen, dass ein rechtzeitiges Ausweichen vor einem Hindernis ermöglicht wird.

Vorteilhafterweise handelt es sich bei der Steuereinrichtung, in der die Funktion vorgesehen ist, um eine Vorrichtung zur adaptiven Fahrgeschwindigkeitsregelung.

Die Erfindung ergibt sich aus den Merkmalen der unabhängigen Ansprüche. Vorteilhafte Weiterbildungen und Ausgestaltungen ergeben sich aus den Unteransprüchen. Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

Vorteilhafterweise wird der Vorrichtung als Eingangsgrößen wenigstens eine der weiteren Größen Querversatz des vorausfahrenden Fahrzeugs relativ zum eigenen Fahrzeug, Geschwindigkeit des eigenen Fahrzeugs, Beschleunigung des eigenen Fahrzeugs, Gierrate, Beschleunigung des eigenen Fahrzeugs, Lenkradwinkel, relative Quergeschwindigkeit des vorausfahrenden Fahrzeugs bezüglich des eigenen Fahrzeugs, Breite des detektierten Zielobjekts, Höhe des detektierten Zielobjekts und Fahrbahnreibwert als Eingangsgröße zugeführt. Es ist erfindungsmäßig nicht notwendig, dass der Funktion alle aufgeführte Größen zugeführt werden, es kann auch nur eine einzige oder mehrere der aufgeführten Größen oder zusätzliche, nicht genannte Größen der Funktion zugeführt werden.

Vorteilhafter Weise werden die Eingangsgrößen der vorgesehenen Funktion von wenigstens einer der Vorrichtungen Radarsensor, Lidarsensor, Videosensor, Mehrfachvideosensor, Gierratensensor, Lenkwinkelsensor oder Raddrehzahlsensor bereitgestellt. Es ist weiterhin im Sinne der Erfindung vorgesehen, dass einer oder mehrere dieser Sensoren an ein Steuergerät angeschlossen ist und die erfindungsgemäße Funktion Eingangsgrößen von diesem Steuergerät erhält, beispielsweise kann die Raddrehzahl von einem Steuergerät einer Antiblockiereinrichtung oder von einem Steuergerät zur Fahrdynamikregelung der Funktion zugeführt werden.

Die adaptive Fahrgeschwindigkeitsregelung umfaßt vorteilhafterweise eine Stop&Go-Regelung, durch die das fahrgeschwindigkeitsgeregelte Fahrzeug bis in den Stillstand abbremsen und nach erfolgtem Stillstand selbständig oder mit Fahrerquittierung wieder anfahren kann, wie es in Warteschlangen vor Verkehrsampeln oder bei Verkehrsstockungen vorkommen kann.

Weiterhin kann der Videosensor vorteilhafterweise als Multivideosensor ausgestaltet sein, der zwei oder mehrere Einzelvideosensoren umfaßt, so dass mittels einer angeschlossenen Bildverarbeitung eine räumliche Situationserfassung ermöglicht wird.

Vorteilhafterweise ist der Radarsensor oder der Lidarsensor entweder als Einstrahlradarsensor bzw. Einstrahllidarsensor oder aber als Mehrstrahlradarsensor bzw. Mehrstrahllidarsensor ausgebildet.

Weiterhin ist der Radarsensor oder der Lidarsensor vorteilhafterweise als schwenkbarer Radarsensor oder als schwenkbarer Lidarsensor ausgebildet.

Weiterhin vorteilhaft ist es, dass die von der Funktion bereitgestellten Größen sowie die dazugehörigen Daten, die maßgeblich für die Bildung dieser Größen sind, sowie weitere Daten, die auf den Zeitpunkt und die Situation des Auslösungssignals schließen lassen, in einem nicht-flüchtigen Speicher abgelegt werden und dort für Auslesevorgänge bereitgehalten werden.

Vorteilhafterweise sind die abgespeicherten Größen sowie die dazugehörigen Daten erst nach dem Auslesen überschreibbar.

Weiterhin ist es vorteilhaft, dass die nicht-flüchtige Speichervorrichtung durch eine Konstruktion vor einer unfallbedingten Zerstörung geschützt wird, so dass ein Auslesen der gespeicherten Daten auch nach einer Kollision und einer damit verbundenen Zerstörung der Einrichtung, in der die erfindungsgemäße Funktion vorgesehen ist, möglich ist.

Erfindungsgemäß wird das Auslösesignal für eine Bremsung bzw. einen Lenkeingriff ausgegeben, wenn die Ungleichung

$$-(d/vr) \leq sqrt(2 \cdot deltayFlucht / |ay|) \cdot alphai \qquad (1)$$

erfüllt ist, wobei d der Abstand zum vorausfahrenden Fahrzeug, vr die Relativgeschwindigkeit des vorausfahrenden Fahrzeugs in Bezug auf das eigene Fahrzeug, die bei Annäherung der beiden Fahrzeuge negativ ist, deltayFlucht die halbe Breite des eigenen Fahrzeugs abzüglich des Betrags des minimalen Abstandes des erkannten Zielobjekts zur verlängerten Fahrzeugmittelachse des eigenen Fahrzeugs zuzüglich der halben Objektausdehnung des erkannten Zielobjekts senkrecht zur verlängerten Fahrzeugmittelachse des eigenen Fahrzeugs, |ay| der Betrag der mittleren, maximal möglichen Querbeschleunigung des Fahrzeugs bei einem Ausweichmanöver und alphai einen Sicherheitsfaktor kleiner oder gleich 1 darstellt.

Weiterhin ist es vorteilhaft, dass die Speicherung der bereitgestellten, nicht umsetzbaren Größen entweder als Datensatz aller Eingangsgrößen bei Auftreten des Auslösesignals erfolgt oder in einem Klassensystem, das die Auftrittshäufigkeit des Auslösesignals in Abhängigkeit verschiedener Sicherheitsfaktoren alphai festhält, erfolgt oder nur dann erfolgt, wenn

$$-(vr/d) \cdot sqrt(2 \cdot deltayFlucht \, / \, |ay|) \cdot alphai \qquad (2)$$

einen Wert erreicht, der größer ist als der kleinste Wert einer festen Anzahl von bisher erreichten Spitzenwerten.

Vorteilhaft ist es auch, dass durch die Auswertung von Eingangsdaten eine Fehlauslösung des Auslösesignals festgestellt werden kann und bei Vorliegen einer festgestellten Fehlauslösung ein weiterer Datensatz gespeichert wird. Eine Fehlauslösung in diesem Sinne ist ein Auslösesignal, das sich aufgrund der Umgebungssituation und des weiteren Fahrverlaufs als unbegründet herausstellt.

Es ist außerdem vorteilhaft, dass die Daten, die in dem nicht-flüchtigen Speicher abgelegt werden, verschlüsselt gespeichert werden.

Zeichnungen

Nachfolgend werden Ausführungsbeispiele der Erfindung anhand einer Zeichnung erläutert. Es zeigen

Figur 1    ein Blockschaltbild einer bevorzugten Ausführungsform der beanspruchten Steuereinrichtung und
Figur 2    eine Skizze zur Beurteilung der Kollisionswahrscheinlichkeit und
Figur 3    ein Ablaufdiagramm einer möglichen Ausführungsform.

Beschreibung von Ausführungsbeispielen

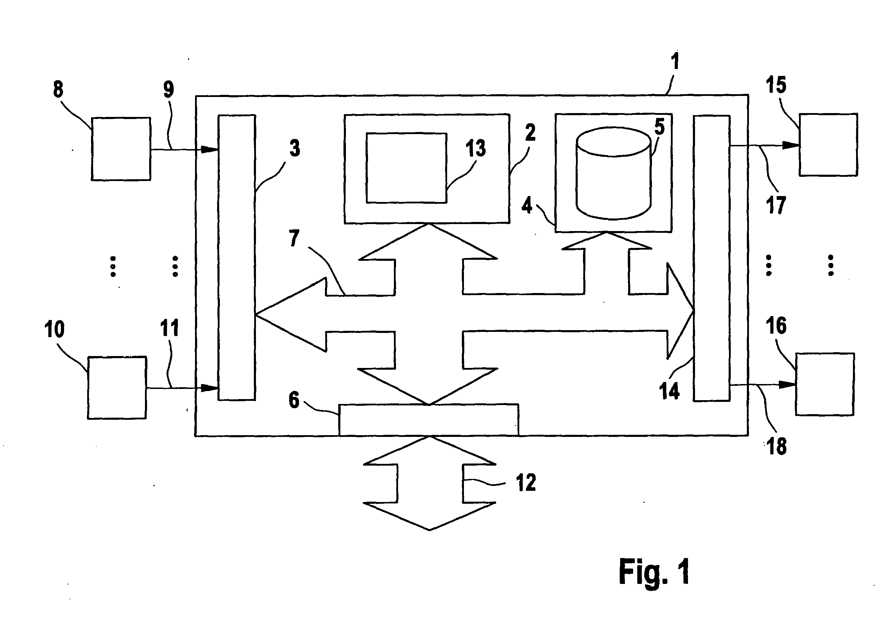

Figur 1 zeigt eine Steuereinrichtung (1), die unter anderem einen Mikroprozessor (2) enthält, in dem unter anderem die vorgesehene Funktion (13) implementiert ist. Weiterhin enthält die Steuereinrichtung (1) eine Eingangsschaltung (3), über die das Steuergerät (1) Eingangsgrößen (9, 11) von mindestens einer Meßwerterfassungseinrichtung (8, 10) erhält. Weiterhin enthält die Steuereinrichtung (1) eine Ausgangsschaltung (14), über die Ausgangsgrößen (17, 18) an ein oder mehrere Stellglieder (15, 16) weitergeleitet werden können. Die Steuereinrichtung (1) umfaßt eine Schnittstelle (6), über die das Steuergerät (1) mit einem externen Diagnosegerät oder Auswertegerät kommunizieren kann. Hierzu ist es notwendig, ein Kommunikationsmedium, vorteilhafterweise ein Schnittstellenkabel (12), das wiederum mit einer externen Diagnose- oder Auswertevorrichtung verbunden ist, mit der Schnittstelle (6) der Steuereinrichtung (1) zu verbinden. Es ist auch denkbar, dass die Schnittstelle, über die die Steuereinrichtung mit einem Diagnose- oder Auswertegerät kommuniziert, nicht wie in Figur 1 dargestellt ausgebildet ist, sondern dass zu Diagnose- und Auswertevorgängen der gleiche CAN-Bus verwendet wird, über den die Steuereinrichtung die Ein- bzw. Ausgangssignale erhält bzw. ausgibt. Des Weiteren enthält die Steuereinrichtung (1) einen nicht-flüchtigen Speicher (4), in dem bei Bedarf Datensätze (5) gespeichert werden können und für Auslesevorgänge bereitgehalten werden können. Die Steuergerätkomponenten Eingangsschaltung (3), Ausgangsschaltung (14), Kommunikationsschnittstelle (6), Mikroprozessor (2) sowie der nicht-flüchtige Speicher (4) sind untereinander mit einem internen Kommunikationssystem (7) verbunden, über das Daten und Informationen in beliebiger Richtung ausgetauscht werden können.

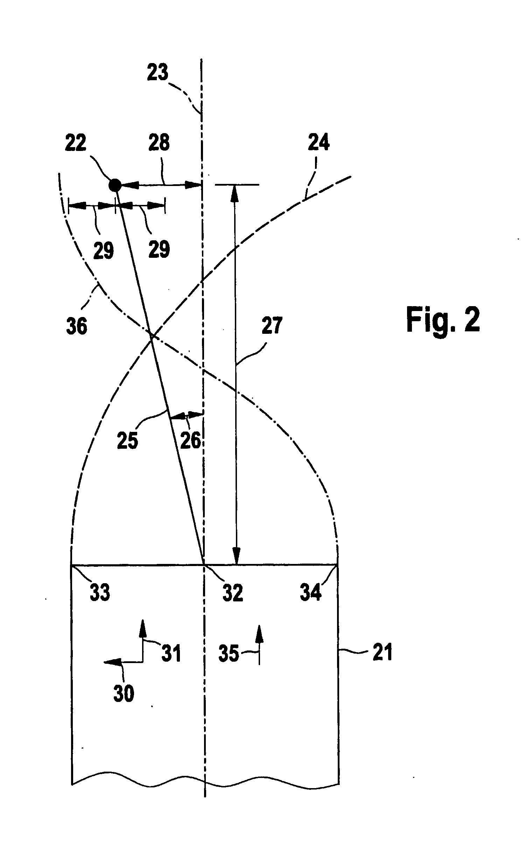

Figur 2 zeigt eine Skizze, mit der die vorgesehene Funktion (13) entscheiden kann, ob der Fahrzeugführer eine drohende Kollision noch rechtzeitig vermeiden kann. Das Inertialsystem (21) des Fahrzeugs besteht aus einer Längsrichtung (31) sowie einer Querrichtung (30). Dieses Fahrzeug (21) bewegt sich in Richtung der Längsrichtung (31) mit der Relativgeschwindigkeit vr (35) bezüglich eines erkannten Zielobjektes ZO (22). Eine Vorrichtung (8, 10) zur Bereitstellung von Eingangsgrößen (9, 11), im vorliegenden Beispiel handelt es sich hierbei um einen winkelauflösenden Radarsensor, hat in der Entfernung dstrich (25) sowie unter dem Winkel phi (26) ein Zielobjekt ZO (22) erkannt. Dieses Zielobjekt kann ein vorausfahrendes Fahrzeug oder aber auch ein stehendes Objekt auf der Fahrbahn sein. Der genannte Radarsensor ist in diesem Beispiel in der Fahrzeuglängsachse (23), also fahrzeugmittig (32) angebracht. Diese fahrzeugmittige Position (32) besitzt einen Lateralversatz y = 0. Die linke vordere Fahrzeugecke (33) besitzt vorteilhafterweise einen Lateralversatz von y > 0. Die rechte vordere Fahrzeugecke (34) besitzt infolge dessen einen Lateralversatz von y < 0. Aus den gemessenen relativen Polarkoordinaten dstrich (25) und phi (26) kann nun der Abstand in Längsrichtung d (27) sowie der Lateralversatz ym (28) berechnet werden. Die Breite des Zielobjekts ZO, also dessen Ausdehnung des Zielobjekts senkrecht zur Fahrzeuglängsachse kann entweder durch einen festen Parameter vorgegeben werden für den Fall, dass sich die Objektbreite nicht hinreichend fein auflösen läßt oder aber, bei einer ausreichenden feinen Auflösung des Sensors, durch eine aus den Messwerten berechnete, erkannte Breite berücksichtigt werden. Diese Lateralausdehnung wird im vorliegenden Ausführungsbeispiel durch die Größe deltayobj (29), die die halbe Objektbreite beträgt, verkörpert. Für die weitere Berechnung wird für das erkannte Zielobjekt (28) die laterale Ausdehnung zwischen den Werten ym-deltayobj und ym+deltayobj angenommen. Die gestrichelte Linie (24) stellt im vorliegenden Ausführungsbeispiel die Fluchttrajektorie der linken, vorderen Fahrzeugecke dar. Diese Fluchttrajektorie beschreibt die Bewegungsbahn der Fahrzeugecke (33), die sich während einem Ausweichmanöver zur Vermeidung einer Kollision relativ zum Zielobjekt ZO (22) ergibt. Auch in dem Fall, dass das Fahrzeug (21) das vorausfahrende Objekt (22) überholen möchte und dazu aus der Fahrbahn nach links ausschert, ergibt sich eine Fluchttrajektorie, wie es durch die strichpunktierte Linie (36) dargestellt wurde, die jedoch eine unterschiedliche Form aufweist.

Vergleicht man den minimalen Abstand, bei dem ein Ausweichen fahrdynamisch noch möglich ist mit dem minimalen Abstand bei dem eine kollisionsvermeidende Vollbremsung noch möglich ist, so stellt man fest, dass nur bei kleinen Relativgeschwindigkeiten, der Minimalabstand, bei dem ein Ausweichen möglich ist, kleiner ist als der Minimalabstand, bei dem eine kollisionsvermeidende Vollbremsung noch möglich ist. Folglich kann nur bei einer kleinen Relativgeschwindigkeit zum vorausfahrenden Fahrzeug eine Kollision durch eine Bremsung vermieden werden, die durch Ausweichen nicht mehr hätte vermieden werden können. Bei größeren Relativgeschwindigkeiten kann jedoch durch eine aktive Vollbremsung die Kollisionsschwere durch die Reduktion der Aufprallenergie verringert werden (Collision Mitigation).

Im folgenden wird ein Ansatz beschrieben, der einen Bremseneingriff nahe der maximalen, für das Fahrzeug möglichen Verzögerung vorsieht, wenn ein Ausweichen vor dem vorausfahrenden Fahrzeug nicht mehr möglich ist. Hierzu wird die neue Größe TTC (Time-To-Collision) eingeführt, die den Zeitraum bis zur berechneten Kollision beschreibt. Diese verbleibende Zeit berechnet sich zu

$$TTC = d/(-vr) \qquad (3).$$

Ist es möglich, innerhalb dieser Zeit mit der Querbeschleunigung ay eine Fluchttrajektorie (24) vorherzusehen, die vor dem Zielobjekt ZO (22) verläuft, so kann noch ein Lenkeingriff zur Kollisionsvermeidung durchgeführt werden. Die Querbeschleunigung ay ist die mittlere, maximal mögliche Querbeschleunigung, die das Fahrzeug mit einem Lenkmanöver erreichen kann. Ist es innerhalb dieser Zeit nicht mehr möglich, ein Ausweichmanöver mit der Querbeschleunigung ay nach Art der Fluchttrajektorie (24) durchzuführen, so wird die Auslösung einer Vollbremsung veranlaßt. Aus dem Zeit-Beschleunigungs-Gesetz kennt man die Gleichung

$$t = sqrt(2 \cdot |y| / |ay|) \qquad (4),$$

wobei ay die Querbeschleunigung ist und y den Querweg darstellt, der zum Ausweichen vor der Kollision zurückgelegt werden muß. Dieser Querweg, der vor der Kollision zurückgelegt sein muß, wird im Weiteren als deltayFlucht bezeichnet. Im vorliegenden Ausführungsbeispiel berechnet sich dieser Querweg deltayFlucht nach Figur 2 aus der halben Fahrzeugbreite yl abzüglich des Betrags des Lateralversatzes des Zielobjektes ym (28) zuzüglich der lateralen Objektungenauigkeit deltayobj. Damit ergibt sich aus Gleichung 4

$$t = sqrt(2 \cdot (yl - |ym| + deltayobj) / |ay|) \qquad (5).$$

Da dieser Querweg vor Ablauf der bis zur Kollision verbleibenden Zeit zurückgelegt sein muß, kann man Gleichung 3 und Gleichung 5 zu folgender Ungleichung zusammenfassen:

$$-(d/vr) \leq sqrt(2 \cdot (yl - |ym| + deltayobj) / |ay|) \qquad (6)$$

Diese Ungleichung wird auch als Auslöseschwelle festgelegt. Solange diese Ungleichung nicht erfüllt ist, hat der Fahrer noch ausreichend Zeit, ein Ausweichmanöver vorzunehmen oder aber er beabsichtigt lediglich ein Überholmanöver. Ist diese Ungleichung, die die Auslöseschwelle darstellt, erfüllt, so droht eine Kollision mit dem vorausfahrenden oder vorausstehenden Objekt und es wird automatisch eine Not- oder Vollbremsung eingeleitet. Die Ungleichung, die die Auslöseschwelle beschreibt, kann zusätzlich noch durch einen Sicherheitsfaktor alphai erweitert werden, wodurch sich - (d/vr) ≤ sqrt (2·(yl-|ym|+deltayobj)/|ay|)·alphai (7) ergibt. Durch die Wahl alphai < 1 läßt sich vorteilhafterweise in die Entscheidung der Ungleichung eine Reserve einplanen. Die Entscheidung, ob nur ein Lenkeingriff oder nur ein Bremseneingriff oder eine Kombination aus Lenk- und Bremseneingriff durchgeführt werden soll, kann vorteilhafterweise mittels der gleichen Bedingungsungleichung entschieden werden, indem für jede Auslösung unterschiedliche Sicherheitsfaktoren alphai verwendet werden.

Wird eine der mehreren möglichen Auslöseschwellen überschritten, so sieht ein erstes Speicherkonzept vor, dass die zu diesem Zeitpunkt für die Interpretation der Umgebungssituation relevanten Daten im nicht-flüchtigen Speicher (4) als Datensatz (5) abgespeichert werden. Dieses Speicherkonzept hat den Vorteil, dass nach einer erfolgten Kollision der Unfallhergang nachkonstruiert werden kann. Ein weiteres Speicherkonzept sieht vor, dass in der Funktion (13) mehrere Auslöseschwellen vorgesehen sind, die sich lediglich durch unterschiedliche Sicherheitsfaktoren alphai unterscheiden. In diesem Fall wird im nicht-flüchtigen Speicher (4) die Häufigkeit der Auslösungen in Abhängigkeit der verschiedenen Auslöseschwellen und damit der verschiedenen Sicherheitsfaktoren alphai abgespeichert. Dieses Speicherkonzept hat den Vorteil, dass nur sehr wenig Speicherkapazität notwendig ist. Weiterhin ist es durch dieses Konzept möglich, einen geeigneten Sicherheitsfaktor alphai empirisch zu ermitteln. Steht genügend Speicherplatz zur Verfügung, so kann in ähnlicher Weise wie im ersten Speicherkonzept für jede oder eine maximale Anzahl von Auslösungen jeweils ein Datensatz mit für die Interpretation der Umgebungssituation relevanten Daten im nicht-flüchtigen Speicher (4) abgespeichert werden.

Vorteilhafterweise bekommen die Auslösungen Priorität bei der Speicherzuordnung, die einer unempfindlichen Schwelle entsprechen, z.B. bei kleineren alphai. So wird im Fall, dass der Speicherplatz für weitere Auslösungsdatensätze nicht mehr reicht, ein vorher gespeicherter Datensatz gelöscht, wenn diese Auslösung mit einer empfindlicheren Schwelle ausgelöst wurde.

Ein drittes Speicherkonzept sieht vor, dass die beiden Ausdrücke links und rechts des Ungleichheitszeichens der Auslöseungleichung (Gl. 7) einzeln ermittelt werden und eine festgelegte Anzahl von bisher erreichten Spitzenwerten, die sich nach Gleichung 2 ergeben, gespeichert werden. Liegt der momentan ermittelte Wert über dem kleinsten bisher gespeicherten Spitzenwert, so wird der momentane Wert neu aufgenommen und der bisher kleinste gespeicherte Spitzenwert gelöscht. Bei diesem Speicherkonzept ist es vorteilhaft, dass man mit einer sehr kleinen Speicherkapazität auskommt.

Das Auslesen des Datensatzes (5) aus dem nicht-flüchtigen Speicher (4) kann auf verschiedene Arten erfolgen. So ist es möglich, dass während der Regelinspektion der Datensatz (5) über das interne Kommunikationssystem (7) und die Schnittstelle (6) auf ein externes Gerät übertragen werden kann. Weiterhin ist es möglich, nach einem erfolgten Unfall den Datensatz (5) aus dem nicht-flüchtigen Speicher (4) auf gleiche Weise über das interne Kommunikationssystem (7) und die Schnittstelle (6) auszulesen. Nach erfolgtem Auslesen des Datensatzes (5) aus dem Speicher (4) ist es sowohl möglich, die bisher angefallenen Daten zu löschen oder aber die bisher angefallenen Daten weiterhin im Speicher zu belassen und im weiteren Fahrtverlauf zu vervollständigen.

Weiterhin ist es möglich, eine Fehlalarmerkennung vorzusehen. Wird die Auslöseschwelle nach Gleichung 7 überschritten, so wird ein Auslösesignal, das einer Not- oder Vollbremsung entspricht, ausgelöst. Nimmt zum Beispiel im weiteren Verlauf die Zeit bis zur Kollision (TTC) wieder zu oder wird ein Ausweichen wieder möglich, so kann es sein, dass die Auslösebedingung im Weiteren nicht mehr erfüllt ist. In diesem Fall kann die vorgesehene Funktion (13) selbsttätig erkennen, dass die Auslösung einer Not- oder Vollbremsung nicht angebracht ist und dieses Auslösesignal einem Fehlalarm entspricht. Bei Erkennung eines derartigen Fehlalarms können vorteilhafterweise auch Daten gespeichert werden, so dass die Ursache des Fehlalarms analysierbar ist. Diese Daten können die gleichen Größen sein, wie im Fall einer Auslösung, es ist aber auch denkbar, dass weitere Signale gespeichert werden, die der Eigendiagnose dienen, insbesondere auch Eigendiagnosesignale der angeschlossenen Umgebungssensoren.

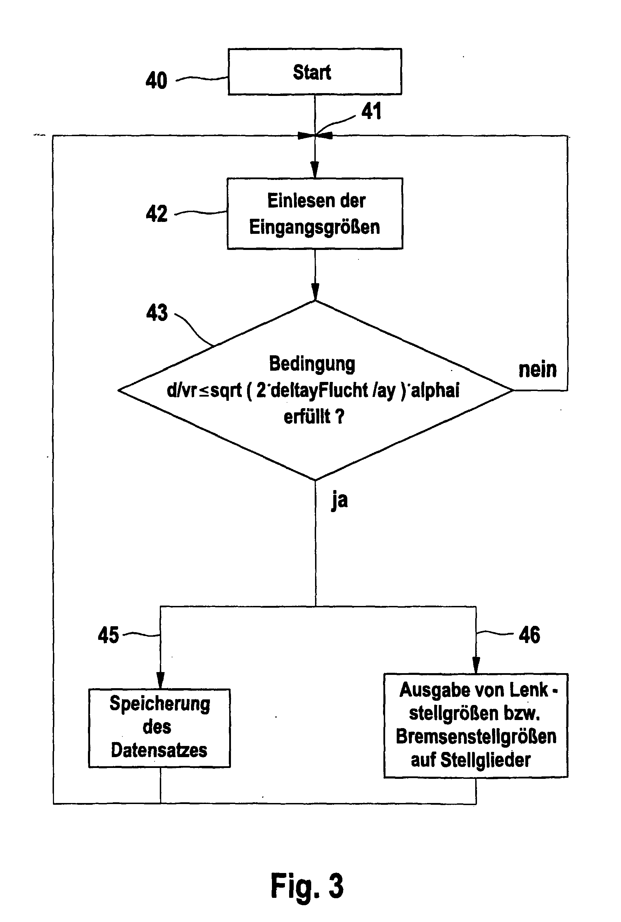

In Figur 3 ist ein Ablaufdiagramm einer möglichen Ausführungsform dargestellt. Nach erfolgtem Start (40) des Algorithmus, in dessen Umfang ein Selbsttest sowie eine Initialisierung vorgesehen ist, erfolgt ein erstmaliges Einlesen von Eingangsgrößen (42). Diese Eingangsgrößen werden im folgenden Schritt (43) in eine Bedingung, im vorliegenden Beispiel handelt es sich dabei um eine Ungleichung, eingesetzt. Ist die dargestellte Bedingung nicht erfüllt, so ist das momentane Kollisionsrisiko sehr klein und kein automatischer Eingriff in Bremse beziehungsweise Lenkung notwendig. So sind auch Bedingungen, die aus mehreren Einzelbedingungen bestehen, möglich. Ist die in Figur 3 genannte Bedingung nicht erfüllt so verzweigt der Algorithmus nach "nein" und es werden in einem neuen Durchlauf des Blocks (42) neue Eingangsgrößen eingelesen. Dies läßt auf eine zu geringe, momentane Kollisionswahrscheinlichkeit schließen, so dass kein Bremsbeziehungsweise Lenkeingriff vorzunehmen ist. Sollte die Bedingung im Block (43) erfüllt sein, so muß mit einem hohen Kollisionsrisiko gerechnet werden. Durch ein Verzweigen aus (43) nach "ja" werden die aktuellen Werte der für die Rekonstruktion der Umgebungssituation relevanten Signale im Block (45) gespeichert und für künftige Auslesevorgänge in der Speichervorrichtung bereitgehalten. Gleichzeitig wird in Block (46) ein Brems- bzw. Lenkeingriff ausgelöst und in Abhängigkeit der erkannten momentanen Fahrsituation durchgeführt.

Nach erfolgter Speicherung der aktuellen Daten in Block (45) bzw. nach erfolgter Durchführung eines Brems- bzw. Lenkeingriffs in Block (46) wird der Ablauf des Algorithmus nach Punkt (41) weitergeleitet und von dort aus zu einem erneuten Einlesevorgang in Block (42) fortgesetzt.

Eine weiteres Ausführungsbeispiel sieht vor, dass die Daten, die im nicht-flüchtigen Speicher der Steuereinrichtung gespeichert werden, zusätzlich in einem nicht-flüchtigen Speicher eines weiteren Steuergerätes, das mit der ersten Steuereinrichtung durch ein Datenkommunikationsmedium verbunden ist, gespeichert werden. Vorteilhafterweise wird hierdurch ein Datenverlust infolge einer unfallbedingten Zerstörung des ersten Steuergerätes vermieden. Das weitere Steuergerät kann ein Steuergerät zur Steuerung einer beliebigen Fahrzeugfunktion wie beispielsweise ABS, Fahrdynamikregelung, Motorsteuerung, Bordcomputer oder ähnlichem sein.

**Patentansprüche**

1. Vorrichtung zur adaptiven Fahrgeschwindigkeitsreglung eines Kraftfahrzeugs, in Abhängigkeit von Abstand und Relativgeschwindigkeit zu einem in Fahrtrichtung sich befindenden Objekt, wobei die Vorrichtung Mittel enthält für wenigstens eine zusätzliche Stellgröße, die eine automatische Bremsung beziehungsweise einen automatischen Lenkeingriff betrifft, wobei als Bremsung eine Verzögerung zur Kollisionsverminderung vorgesehen ist, die im Bereich der für das jeweilige Fahrzeug maximal möglichen Verzögerung liegt beziehungsweise dass als automatischer Lenkeingriff eine Lenkbewegung der Räder des Kraftfahrzeugs derart vorgesehen ist, dass ein rechtzeitiges Ausweichen vor einem Hindernis ermöglicht wird, **dadurch gekennzeichnet, dass** Mittel vorhanden sind zur Auslösung eines Signals für eine Bremsung, die im Bereich der für das jeweilige Fahrzeug maximal möglichen Verzögerung liegt beziehungsweise eines Lenkeingriffs, der eine Lenkbewegung der Räder des Kraftfahrzeugs zum rechtzeitigen Ausweichen vor einem Hindernis vorsieht, wenn die Ungleichung

$$-(d/vr) \leq sqrt(2 \cdot deltayFlucht/|ay|) \cdot alphai$$

erfüllt ist, wobei

d: der Abstand zum vorausfahrenden Fahrzeug (22),
vr: die Relativgeschwindigkeit des vorausfahrenden Fahrzeugs (22) in Bezug auf das eigene Fahrzeug (21),
deltayFlucht: die halbe Breite des eigenen Fahrzeugs abzüglich des Betrags des Lateralversatzes des erkannten Zielobjekts (22) zur verlängerten Fahrzeugmittelachse des eigenen Fahrzeugs zuzüglich der halben Objektausdehnung des erkannten Zielobjekts senkrecht zur verlängerten Fahrzeugmittelachse des eigenen Fahrzeugs,
ay: die mittlere, maximal mögliche Querbeschleunigung des eigenen Fahrzeugs bei einem Ausweichmanöver, und
alphai: einen Sicherheitsfaktor kleiner oder gleich Eins darstellt.

2. Vorrichtung nach Anspruch 1, **dadurch gekennzeichnet, dass** die Vorrichtung als Eingangsgrößen (9,11) wenigstens eine der weiteren Größen

- Querversatz des vorausfahrenden Fahrzeugs relativ zum eigenen Fahrzeug,
- Geschwindigkeit des eigenen Fahrzeugs,
- Beschleunigung des eigenen Fahrzeugs,
- Gierrate,
- Querbeschleunigung des eigenen Fahrzeugs,
- Lenkradwinkel,
- relative Quergeschwindigkeit des vorausfahrenden Fahrzeugs bezüglich des eigenen Fahrzeugs,
- Höhe des detektierten Objektes,
- Objektausdehnung in Querrichtung,
- Fahrbahnreibwert

verarbeitet, jedoch nicht zwangsläufig alle.

3. Vorrichtung nach Anspruch 1, **dadurch gekennzeichnet, dass** die Eingangsgrößen (9,11) von wenigstens einer der Vorrichtungen

- Radarsensor,

- Lidarsensor,
- Videosensor,
- Mehrfachvideosensor,
- Gierratensensor,
- Lenkwinkelsensor oder
- Raddrehzahlsensor

(8,10) bereitgestellt werden, jedoch nicht zwangsläufig von allen.

4. Vorrichtung nach Anspruch 1, **dadurch gekennzeichnet, dass** die Stellgrößen, die auf die Bremsenstellglieder beziehungsweise die Lenkstellglieder ausgegeben werden zusätzlich mit weiteren situationsabhängigen Umfelddaten in einer nicht-flüchtigen Speichervorrichtung (4) gespeichert werden.

5. Vorrichtung nach Anspruch 4, **dadurch gekennzeichnet, dass** die nicht-flüchtige Speichervorrichtung (4) durch eine Vorrichtung geschützt ist, die eine unfallbedingte Zerstörung des Speichers verhindert.

6. Vorrichtung nach Anspruch 1, **dadurch gekennzeichnet, dass** die Vorrichtung zur adaptiven Fahrgeschwindigkeitsregelung eine Stop&Go-Regelung beinhaltet.

7. Verfahren zur adaptiven Geschwindigkeitsregelung eines Kraftfahrzeugs, in Abhängigkeit von Abstand und Relativgeschwindigkeit zu einem in Fahrtrichtung sich befindenden Objekt, wobei als Bremsung eine Verzögerung zur Kollisionsverminderung vorgesehen ist, die im Bereich der für das jeweilige Fahrzeug maximal möglichen Verzögerung liegt und/oder dass als automatischer Lenkeingriff ein Einschlagen der lenkbaren Räder des Kraftfahrzeugs vorgesehen ist, das ein rechtzeitiges Ausweichen vor einem Hindernis ermöglicht, **dadurch gekennzeichnet, dass** ein Signal zur Auslösung für eine Bremsung, die im Bereich der für das jeweilige Fahrzeug maximal möglichen Verzögerung liegt beziehungsweise eines Lenkeingriffs, der eine Lenkbewegung der Räder des Kraftfahrzeugs zum rechtzeitigen Ausweichen vor einem Hindernis vorsieht, ausgegeben wird, wenn die Ungleichung

$$-(d/vr) \leq sqrt(2 \cdot deltayFlucht/|ay|) \cdot alphai$$

erfüllt ist, wobei
d: der Abstand zum vorausfahrenden Fahrzeug,
vr: die Relativgeschwindigkeit des vorausfahrenden Fahrzeugs in Bezug auf das eigene Fahrzeug,
deltayFlucht: die halbe Breite des eigenen Fahrzeugs (33) abzüglich des Betrags des Lateralversatzes des erkannten Zielobjekts zur verlängerten Fahrzeugmittelachse des eigenen Fahrzeugs (28) zuzüglich der halben Objektausdehnung des erkannten Zielobjekts senkrecht zur verlängerten Fahrzeugmittelachse des eigenen Fahrzeugs (29),
ay:die mittlere, maximal mögliche Querbeschleunigung des Fahrzeugs bei einem Ausweichmanöver, und
alphai:einen Sicherheitsfaktor kleiner oder gleich Eins
darstellt.

8. Verfahren nach Anspruch 7, **dadurch gekennzeichnet, dass** die Stellgrößen, die auf die Bremsenstellglieder beziehungsweise die Lenkstellglieder ausgegeben werden zusätzlich mit weiteren situationsabhängigen Umfelddaten in einer nicht-flüchtigen Speichervorrichtung (4)

- als Datensatz aller Eingangsgrößen, bei Auftreten des Auslösesignals, erfolgt oder
- in einem Klassensystem, das die Auftrittshäufigkeit des Auslösesignals in Abhängigkeit verschiedener Sicherheitsfaktoren alphai festhält, erfolgt oder
- nur dann erfolgt, wenn [-(vr/d)·(2·deltayFlucht/|ay|)$^{1/2}$·alphai] einen Wert erreicht, der größer ist als der kleinste Wert einer festen Anzahl von bisher erreichten Spitzenwerten.

9. Verfahren nach Anspruch 7, **dadurch gekennzeichnet, dass** durch Auswertung von Eingangsdaten (9,11) eine Fehlauslösung des Auslösesignals festgestellt werden kann und bei Vorliegen einer festgestellten Fehlauslösung ein weiterer Datensatz gespeichert wird.

**Claims**

1. Device for performing adaptive cruise control of a motor vehicle as a function of the distance and relative velocity with respect to an object located in the direction of travel, wherein the device contains means for at least one additional manipulated variable which relates to automatic braking or to an automatic steering intervention, wherein a deceleration for avoiding a collision is provided as a braking operation, which deceleration is within the range of the maximum possible deceleration for the respective vehicle, or wherein a steering movement of the wheels of the motor vehicle is provided as an automatic steering intervention in such a way that a prompt avoidance manoeuvre before an obstacle is made possible, **characterized in that** means are present for triggering a signal for a braking operation which is within the range of the maximum possible deceleration for the respective vehicle, or for triggering a steering intervention which provides a steering movement of the wheels of the motor vehicle for the prompt avoidance manoeuvre before an obstacle if the inequation

$$ -(d/vr) \leq sqrt(2 \cdot deltayFlucht/|ay|) \cdot alphai $$

is met, where

d: is the distance from the vehicle travelling in front (22),
vr: is the relative velocity of the vehicle travelling in front (22) with respect to the driver's own vehicle (21),
delta y Flucht: is half the width of the driver's own vehicle minus the absolute value of the lateral offset of the detected target object (22) with respect to the extended centre axis of the driver's own vehicle plus half the object extension of the detected target object perpendicular to the extended centre axis of the driver's own vehicle,
ay: is the average maximum possible lateral acceleration of the driver's own vehicle during an avoidance manoeuvre, and
alphai: is a safety factor of less than or equal to one.

2. Device according to Claim 1, **characterized in that** the device processes, as input variables (9, 11) at least one of the further variables

- lateral offset of the vehicle travelling in front in relation to the driver's own vehicle,
- velocity of the driver's own vehicle,
- acceleration of the driver's own vehicle,
- yaw rate,
- lateral acceleration of the driver's own vehicle,
- steering wheel angle,
- relative lateral velocity of the vehicle travelling in front with respect to the driver's own vehicle,
- height of the detected object,
- expansion of the object in the lateral direction,
- coefficient of friction of the underlying surface,

but not necessarily all of them.

3. Device according to Claim 1, **characterized in that** the input variables (9, 11) are made available by at least one of the devices

- radar sensor,
- lidar sensor,
- video sensor,
- multiple video sensor,
- yaw rate sensor,
- steering angle sensor or
- wheel speed sensor

(8, 10) but not necessarily by all of them.

4. Device according to Claim 1, **characterized in that** the manipulated variables which are output to the brake actuators or the steering actuators are additionally stored with further situation-dependent ambient data in a non-volatile memory device (4).

5. Device according to Claim 4, **characterized in that** the non-volatile memory device (4) is protected by a device which prevents the memory from being destroyed in an accident.

6. Device according to Claim 1, **characterized in that** the device for performing adaptive cruise control contains a stop&go controller.

7. Method for performing adaptive cruise control of a motor vehicle as a function of the distance and relative velocity with respect to an object located in the direction of travel, wherein a deceleration for avoiding a collision is provided as a braking operation, which deceleration is within the range of the maximum possible deceleration for the respective vehicle and/or wherein a turning in of the steerable wheels of the motor vehicle is provided as an automatic steering intervention which makes a prompt avoidance manoeuvre before an obstacle possible, **characterized in that** a signal is output for triggering for a braking operation which is within the range of the maximum possible deceleration for the respective vehicle, or for a steering intervention which provides a steering movement of the wheels of the motor vehicle for the prompt avoidance manoeuvre before an obstacle if the inequation

$$-(d/vr) \leq sqrt(2 \cdot deltayFlucht/|ay|) \cdot alphai$$

is met, where

d: is the distance from the vehicle travelling in front,
vr: is the relative velocity of the vehicle travelling in front with respect to the driver's own vehicle,
delta y Flucht: is half the width of the driver's own vehicle (33) minus the absolute value of the lateral offset of the detected target object with respect to the extended centre axis of the driver's own vehicle (28) plus half the object extension of the detected target object perpendicular to the extended centre axis of the driver's own vehicle (29),
ay: is the average maximum possible lateral acceleration of the vehicle during an avoidance manoeuvre, and
alphai: is a safety factor of less than or equal to one.

8. Method according to Claim 7, **characterized in that** the manipulated variables which are output to the brake actuators or the steering actuators are additionally stored with further situation-dependent ambient data in a non-volatile memory device (4)

- as a data record of all the input variables when the triggering signal occurs,
or
- are stored in a class system which records the frequency of occurrence of the triggering signal as a function of various safety factors alphai or
- are stored only if
$[-(vr/d) \cdot (2 \cdot deltayFlucht/|lay|)^{1/2} \cdot alphai]$ reaches a value which is higher than the lowest value of a fixed number of previously reached peak values.

9. Method according to Claim 7, **characterized in that** incorrect triggering of the triggering signal can be detected by evaluating input data (9, 11), and when there is an instance of detected incorrect triggering a further data record is stored.

**Revendications**

1. Dispositif de régulation adaptative de la vitesse d'un véhicule automobile en fonction de la distance et de la vitesse relative par rapport à un objet situé dans la direction de déplacement,
le dispositif comportant des moyens pour avoir au moins une grandeur de réglage supplémentaire concernant un freinage automatique ou une action automatique sur la direction, le freinage étant prévu sous la forme d'une décélération pour réduire la collision, dans la plage de la décélération maximale possible pour le véhicule respectif ou encore l'action automatique sur la direction est un mouvement de direction des roues du véhicule de façon à permettre d'éviter à temps un obstacle,

**caractérisé par**

des moyens pour déclencher un signal d'un freinage situé dans la plage de la décélération maximale possible pour le véhicule ou une action de direction qui prévoit un mouvement de direction des roues du véhicule pour éviter à temps un obstacle, lorsque l'inégalité suivante est réalisée

$$-(d/vr) \leq \mathrm{sqrt}(2\ \mathrm{deltayFlucht}/|ay|)\ \mathrm{alphai},$$

dans laquelle

(d) représente la distance par rapport au véhicule (22) qui précède,

(vr) représente la vitesse relative du véhicule (22) qui précède par rapport à celle du propre véhicule (21),

(deltayFlucht) représente la moitié de la largeur du propre véhicule (21) diminuée de l'amplitude du décalage latéral de l'objet cible (22), reconnu, par rapport au prolongement de l'axe médian du propre véhicule (21), augmentée de la moitié de l'extension de l'objet cible reconnu, perpendiculairement au prolongement de l'axe médian du propre véhicule,

(ay) représente la moyenne de l'accélération transversale maximale possible du propre véhicule pour une manoeuvre servant à éviter un obstacle, et

(alphai) représente un coefficient de sécurité inférieur ou égal à l'unité.

2. Dispositif selon la revendication 1,
   **caractérisé en ce qu'**
   il traite comme grandeurs d'entrée (9, 11) au moins l'une des autres grandeurs suivantes :

   - décalage transversal du véhicule qui précède par rapport au propre véhicule,
   - vitesse du propre véhicule,
   - accélération du propre véhicule,
   - vitesse de lacet,
   - accélération transversale du propre véhicule,
   - angle du volant,
   - vitesse transversale relative du véhicule qui précède par rapport au propre véhicule,
   - hauteur de l'objet détecté,
   - extension de l'objet dans la direction transversale,
   - coefficient d'adhérence de la chaussée,

   toutes ces grandeurs n'étant pas nécessairement prises toutes en combinaison.

3. Dispositif selon la revendication 1,
   **caractérisé en ce que**
   les grandeurs d'entrée (9, 11) sont fournies, sans qu'elles le soient nécessairement toutes, par au moins l'un des dispositifs suivants :

   - capteur radar,
   - capteur lidar,
   - capteur vidéo,
   - capteurs vidéo multiples,
   - capteur de vitesse de lacet,
   - capteur d'angle de direction, ou
   - capteur de vitesse de roue (8, 10).

4. Dispositif selon la revendication 1,
   **caractérisé en ce que**
   les grandeurs de réglage fournies aux éléments d'actionnement des freins ou aux éléments d'actionnement de direction sont mémorisées avec en plus des données de l'environnement dépendant de la situation dans un dispositif de mémoire non volatile (4).

**5.** Dispositif selon la revendication 4,
**caractérisé en ce que**
le dispositif de mémoire non volatile (4) est protégé par un dispositif qui évite la destruction de la mémoire en cas d'accident.

**6.** Dispositif selon la revendication 1,
**caractérisé en ce qu'**
il comporte une régulation marche/arrêt en plus de la régulation adaptative de la vitesse de roulage.

**7.** Procédé de régulation adaptative de la vitesse d'un véhicule automobile en fonction de la distance et de la vitesse relative par rapport à un objet se trouvant dans la direction de déplacement,
un freinage étant effectué par une décélération pour réduire la collision, ce freinage se situant dans la plage de la décélération maximale possible pour le véhicule respectif et/ou comme action automatique sur la direction, il est prévu un braquage des roues directrices du véhicule permettant d'éviter à temps un obstacle
**caractérisé en ce qu'**
on émet un signal pour déclencher un freinage compris dans la plage de la décélération maximale possible pour le véhicule respectif ou une action de braquage qui permet un mouvement de direction des roues du véhicule pour éviter à temps un obstacle, si l'inégalité suivante est réalisée :

$$-(d/vr) \leq sqrt(2\ deltayFlucht/|ay|)\ alphai,$$

dans laquelle
(d) représente la distance par rapport au véhicule qui précède,
(vr) représente la vitesse relative du véhicule qui précède par rapport à celle du propre véhicule,
(deltayFlucht) représente la moitié de la largeur (33) du propre véhicule diminuée de l'amplitude du décalage latéral (28) de l'objet cible, reconnu, par rapport au prolongement de l'axe médian du propre véhicule, augmentée de la moitié (29) de l'extension de l'objet cible reconnu, perpendiculairement au prolongement de l'axe médian du propre véhicule,
(ay) représente la moyenne de l'accélération transversale maximale possible du propre véhicule pour une manoeuvre servant à éviter un obstacle, et
(alphai) représente un coefficient de sécurité inférieur ou égal à l'unité.

**8.** Procédé selon la revendication 7,
**caractérisé en ce que**
les grandeurs de réglage émises pour les organes d'actionnement des freins ou des organes d'actionnement de la direction sont enregistrées avec d'autres données d'environnement dépendant de la situation, dans un dispositif de mémoire non volatile (4),

- comme jeu de données de toutes les grandeurs d'entrée lorsque se produit le signal de déclenchement ou
- dans un système de classe qui retient la fréquence d'occurrence du signal de déclenchement en fonction de différents facteurs de sécurité alphai ou
- seulement si la relation [-(vr/ d) (2 deltayFlucht/ |ay| )$^{1/2}$ alphai] atteint une valeur supérieure à la plus petite valeur d'un nombre fixe de valeurs maximales atteintes jusqu'alors.

**9.** Procédé selon la revendication 7,
**caractérisé en ce que**
par l'exploitation des données d'entrée (9, 11) on constate un déclenchement erroné du signal de déclenchement et en présence d'un déclenchement erroné, constaté, on enregistre en mémoire un autre jeu de données.

Fig. 1

Fig. 2

**Fig. 3**

Start — 40

41

42 — Einlesen der Eingangsgrößen

43 — Bedingung
d/vr ≤ sqrt ( 2·deltayFlucht /ay )·alphai
erfüllt ?

nein

ja

45 — Speicherung des Datensatzes

46 — Ausgabe von Lenk - stellgrößen bzw. Bremsenstellgrößen auf Stellglieder

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0976627 A
- DE 3830790 A1
- US 5485892 A
- EP 0649776 A
- EP 0967121 A
- DE 19729952 A1
- DE 19725656 A1